# EUROPÄISCHE PATENTSCHRIFT

(11) **EP 0 700 423 B1**
(45) Veröffentlichungstag und Bekanntmachung des Hinweises auf die Patenterteilung: **30.07.1997**
(21) Anmeldenummer: 94916221.8
(22) Anmeldetag: 09.05.1994
(51) Int. Cl.: C09D 131/04, C08J 7/04

(54) **PRIMER FÜR KUNSTSTOFF-VERKLEBUNGEN**
PRIMER FOR GLUEING PLASTICS
APPRET DE COLLAGE DE MATIERES PLASTIQUES

(30) Priorität: 18.05.1993 DE 4316585
(43) Veröffentlichungstag der Anmeldung: 13.03.1996
(73) Patentinhaber: Henkel Kommanditgesellschaft auf Aktien, 40191 Düsseldorf (DE)
(72) Erfinder: MÖHKER, Christian, D-40212 Düsseldorf (DE); TAMCKE, Thomas, D-40593 Düsseldorf (DE); WINDHÖVEL, Udo, D-40789 Monheim (DE)
(86) Internationale Anmeldenummer: EP9401485
(87) Internationale Veröffentlichungsnummer: WO9426829

(56) Entgegenhaltungen:
- EP-A- 0 111 239
- EP-A- 0 321 868
- EP-A- 0 499 957
- US-A- 3 088 844

## Beschreibung

Die Erfindung betrifft einen Primer für Verklebungen von Polyolefin-Kunststoffen.

Es ist bekannt, daß Formteile aus synthetischem Kunststoff, insbesondere unpolaren Werkstoffen, wie Polyethylen, Polypropylen, Polybutylen oder deren Copolymere, nur dann miteinander oder mit anderen Substraten verklebt werden können, wenn ihre Oberflächen einer speziellen Vorbehandlung unterworfen wurden (vgl. Ullmann's Encyclopedia of Industrial Chemistry, Band Al, Seite 254, Verlag Chemie Weinheim 1985). Bekannt sind mechanische, thermische, elektrische und chemische Vorbehandlungen. Bekannt ist auch die Vorbehandlung durch einen Auftrag von Primern. Sie stellt eine vergleichsweise einfache Vorbehandlung dar. Es wird nämlich eine dünne Schicht eines Wirkstoffes in einer Lösung oder Dispersion auf die Oberfläche aufgetragen und getrocknet.

In der US-A-3 088 844 sind Polyolefin-Filme beschrieben, die mit einer wässrigen Vinylacetat-Dispersion beschichtet sind. Derartige Filme finden als verschweissbare Verpackungsfolien Verwendung.

In der DE 38 11 021 wird ein derartiger Primer (oder auch Haftgrundierung) für Polymere wie Polyethylen, Polypropylen und deren Copolymerisate, insbesondere Polymere auf der Basis von EPDM, beschrieben. Es handelt sich dabei um eine polymerisationsfähige Zusammensetzung aus monomeren Methacrylsäureestern, einem darin löslichen Elastomeren, einem Plastomerharz sowie einem Photoinitiator. Diese bekannte Haftgrundierung wird durch Rakeln, Gießen oder Walzen auf die zu verklebenden Polymer-Bahnen auf der Basis von EPDM-Elastomeren in Schichtstärken von 50 bis 200 Mikrometer aufgebracht und anschließend mit Hilfe von UV- oder IR-Strahlung polymerisiert. Dadurch erhält man für die nachfolgende Verklebung mit zum Beispiel Chloropren-Kautschuk-Klebstoff eine sichere und dauerhafte Grundlage.
Nachteilig bei diesem bekannten Primer ist die aufwendige Ausrüstung der Polyolefin-Kunststoffe damit.
Es ist auch bekannt, Dispersionshaftvermittler auf der Basis von Ethylen-Vinylacetat-Copolymeren für Kunststoff-Folien auf der Basis von Hart- oder Halbhart-PVC zu verwenden (s. EP 0 307 546).

Es bestand daher ein Bedarf nach einem Primer für Polyolefin-Kunststoffe, der einfach verwendet werden kann.

Die erfindungsgemäße Lösung ist den Patentansprüchen zu entnehmen. Sie besteht im wesentlichen in der Verwendung einer Copolymerisat-Dispersion auf der Basis von Vinylacetat als Primer für Verklebungen von Kunststoffen auf der Basis von Polyolefinen.

Derartige Copolymerisate-Dispersionen auf der Basis von Vinylacetat sind weit verbreitet, insbesondere mit Ethylen als Copolymerisat. Es ist bekannt, sie als Basis zur Herstellung von Klebstoffen zu verwenden, insbesondere zur Herstellung von Papierklebstoffen sowie Boden-, Wand- und Deckenklebstoffen. Auch Kunststoffe können damit verklebt werden, z. B. Hart- und Weich-PVC, Polyester, Celluloseacetat und Polystyrol. Es ist jedoch nicht bekannt, sie als Primer für Kunststoff-Verklebungen oder gar für Polyolefin-Kunststoffe zu verwenden.

Neben Ethylen kommen noch weitere Comonomere in Frage, insbesondere a) Vinylester von Carbonsäuren mit 3 bis 24, insbesondere 8 bis 18 C-Atomen wie z.B. Vinyllaurat und/oder b) Maleinsäuredialkylester, wobei die Alkylgruppen im allgemeinen 1 bis 8, insbesondere 2 bis 4 C-Atome enthalten, z.B. Maleinsäuredi-n-butylester. Weiterhin sind zu nennen: entsprechende Fumarsäureester und Acryl- bzw. Methacrylsäureester sowie Styrol. Die Zusammensetzung des Vinylacetat-Copolymeren nach Anzahl, Art und Menge der Copolymeren beeinflußt natürlich die Härte des Primerfilmes. Harte Filme erhält man z.B. bei Verwendung von Maleinsäuredi-n-butylester. Sie neigen auch weniger dazu, in der Wärme zu blocken.

Zu den "Polyolefinen" zählen bekanntlich Polyethylen, Polypropylen und Polybutylen. Es gehören aber auch dazu die Copolymere mit den vorhin genannten Monomeren als Grundbaustein, z. B. Copolymere aus Ethylen und Propylen bzw. Terpolymere aus Ethylen, Propylen und einem nicht konjugiertem Dien. Insbesondere zählen auch dazu Compounds aus Ethylen-Propylen-Elastomeren und Ethylen-Vinylacetat-Comonomeren. Auf der Basis dieser Polymere werden in letzter Zeit zunehmend elastische FuBbodenbeläge hergestellt. Sie dienen zunehmend als Ersatz für die bisher weitverbreiteten PVC-Bodenbeläge. Sie sind frei von Chlor und Weichmachern und eignen sich zur stofflichen Wiederverwertung.

Unter "wäßriger Copolymerisat-Dispersion auf der Basis von Vinylacetat und Ethylen" sind Dispersionen zu verstehen, die neben dem Polymerisat noch Emulgatoren bzw. Schutzkolloide enthalten können, jedoch keine Weichmacher. Das Wasser hat einen Anteil von 90 bis 30, vorzugsweise 60 bis 40 Gew.-%, bezogen auf die gesamte wäßrige Dispersion. Schließlich kann die Dispersion auch noch weitere Additive enthalten, wie z. B. Farbstoffe, Pigmente, Rheologie-Additive, Entschäumer oder Stabilisatoren.

Der Primer wird auf bekannte Art und Weise, z. B. durch Rakeln, Gießen oder Walzen, auf die zu verklebenden Polymeroberflächen aufgetragen, wobei die Auftragsmenge möglichst klein sein sollte, vorzugsweise im Bereich von 30 bis 70 g Dispersion pro m², was bei einer 50 %igen wäßrigen Dispersion etwa 15 bis 35 g Vinylacetat-Copolymer pro m² entspricht.

Der wäßrige Film wird auf übliche Weise getrocknet, z. B. in einem Trockenkanal mit warmer Luft von 60 - 90 °C. Nach der Trocknung sind die Oberflächen blockfrei. Die mit dem Primer ausgerüsteten Gegenstände können ohne weiteres gestapelt werden. Die vorbehandelten Gegenstände können sofort oder auch nach einigen Wochen weiterverarbeitet werden.

Als Klebstoff eignen sich übliche Dispersionsklebstoffe für PVC, z. B. auf Basis von Acrylatcopolymeren oder Ethylenvinylacetat-Copolymeren, insbesondere ein Dispersionsklebstoff auf der Basis von Ethylenvinylacetatacrylat, wie Thomsit K 188 E der Firma Henkel Bautechnik GmbH.

Die Dispersionsklebstoffe können wie üblich verwendet werden. Schon bei der Verarbeitung zeigt sich ein praktisch sehr wichtiger zusätzlicher Vorteil des erfindungsgemäßen Primers: Die offene Zeit bzw. der Einlegezeitraum wird signifikant verlängert. Während Polyolefinkunststoffe ohne Primer praktisch naß verklebt werden müssen, kann ein Polyolefinkunststoff mit Primer auch noch nach einer Ablüftzeit von 30 Minuten sicher verklebt werden. Dies ist ein sehr wesentlicher Vorteil beim Verkleben von Bodenbelägen.

Nach der vorgeschriebenen Trocknung des Dispersionsklebstoffes ist eine sprunghafte Steigerung der Festigkeitswerte in einer Größenordnung von 300 % feststellbar, verglichen mit Polyolefin-Kunststoffen ohne Primervorbehandlung. Die durch den Primer erreichbaren Festigkeitswerte liegen auf einem Niveau, wie es für PVC-Verklebungen mit vielen wäßrigen Dispersionsklebstoffen üblich ist.

Diese Steigerung der Festigkeit ist besonders überraschend, da sich der Primer selbst nicht als Klebstoff für Polyolefin-Kunststoffe eignet.

Die Vorteile des erfindungsgemä8en Primers sind:
- Bei dem Primer handelt es sich um eine wäßrige Dispersion, die kein organisches Lösungsmittel enthält, welches beim Verdunsten an die Umwelt abgegeben wird.
- Die Oberflächenbehandlung durch den Auftrag des Primers und seine Trocknung ist einfach.
- Die vorbehandelten Polyolefin-Kunststoffe können sofort nach ihrer Trocknung oder später weiterverarbeitet werden.
- Die vorbehandelten Oberflächen blocken nicht.
- Der Einlegezeitraum wird verlängert.
- Es können übliche wäßrige Dispersionsklebstoffe für PVC verwendet werden.
- Der Klebstoffverbund ist vergleichbar mit einer guten PVC-Verklebung.
- Die Recycling-Fähigkeit der geklebten Kunststoffe wird durch den Primer nicht eingeschränkt.

Aufgrund dieser Vorteile eignet sich der erfindungsgemäße Primer insbesondere zum Verkleben von elastischen Bodenbelägen auf der Basis von Polyolefinen. Diese Bodenbeläge sind frei von PVC und von Weichmachern. Sie eigenen sich auBerdem auch gut zur stofflichen Wiederverwertung. Damit erfüllen sie wichtige Voraussetzungen um die bisher weitverbreiteten PVC-Beläge, insbesondere für Fußböden, zu ersetzen. Ihr Nachteil war bisher, daß sie nur mit einer kleinen Anzahl von Hochleistungsklebstoffen einigermaßen ausreichend fest verklebt werden konnten. Das maximal erreichbare Festigkeitsniveau lag knapp unter dem, welches für PVC-Fußböden mit 10 N/cm nach DIN 16 860 vorgeschrieben ist.

Die Erfindung wird nun anhand eines Beispiels im einzelnen erläutert.

### Beispiel

Als Polyolefin-Kunststoff wurde der Bodenbelag Mipolam 900 verwendet, ein PVC- und weichmacherfreier Belag auf der Basis eines Compounds aus Ethylen/Vinylacetat-Copolymeren mit Polyethylen und Polypropylen. Als Primer wurde eine 60 %ige wäßrige Dispersion eines Ethylen/Vinylacetat-Copolymeren verwendet, die mit Polyvinylalkohol und oberflächenaktiven Substanzen stabilisiert war. Auf der Rückseite des Bodenbelags wurden 60 g pro m² des Primers mit einer Rolle aufgetragen. Der Primer wurde bei 70 °C innerhalb von 30 Minuten an der Luft getrocknet. Der erzeugte Belag klebte nicht und blockte nicht. Nach 3 Tagen wurde der so vorbehandelte Bodenbelag mit dem handelsüblichen wäßrigen Dispersionsklebstoff Thomsit K 188 E der Firma Henkel Bautechnik GmbH entsprechend der Gebrauchsanleitung auf Buchenholz geklebt. Die Proben wurden entweder a) 14 Tage bei Raumtemperatur gelagert oder aber b) 7 Tage bei Raumtemperatur, anschließend 5 Tage bei 70 °C und 2 Tage bei Raumtemperatur. Danach wurden in Anlehnung an DIN 53 278 die Schälwiderstände in N pro cm gemessen. Proben ohne Primervorbehandlung ergaben Werte von 7 N pro cm, die Proben mit Primervorbehandlung ergaben Werte von 24 bzw. 19 N pro cm.

## Patentansprüche

1. Verwendung einer Zusammensetzung, die auf einer wäßrigen Copolymerisat-Dispersion von Vinylacetat basiert, als Primer für Verklebungen von Polyolefin-Kunststoffen.

2. Verwendung nach Anspruch 1, gekennzeichnet durch Ethylen und/oder Maleinsäure-n-alkylester als Comonomere, wobei die Alkyl-Gruppe 1 bis 8 C-Atome enthält.

3. Verwendung eines Primers nach Anspruch 1 oder 2, gekennzeichnet durch eine Auftragsmenge von 15 bis 35 g Copolymerisat pro m².

4. Verwendung nach Anspruch 3, gekennzeichnet durch wäßrige Dispersionsklebstoffe als Klebstoffe.

## Claims

1. The use of a composition based on an aqueous copolymer dispersion of vinyl acetate as a primer for bonding polyolefin plastics.

2. The use claimed in claim 1, characterized by ethylene and/or maleic acid n-alkyl esters as comonomer, the alkyl group containing 1 to 8 carbon atoms.

3. The use of a primer as claimed in claim 1 or 2, characterized by an applied quantity of 15 to 35 g of copolymer per m².

4. The use claimed in claim 3, characterized by aqueous dispersion adhesives as adhesives.

## Revendications

1. Utilisation d'une composition qui est basée sur une dispersion aqueuse de copolymères d'acétate de vinyle, comme apprêt pour des collages de matières plastiques de polyoléfines.

2. Utilisation selon la revendication 1,
caractérisée par
de l'éthylène et/ou des n-alkylesters d'acide maléique comme comonomères, tandis que le groupe alkyle contient 1 à 8 atomes de C.

3. Utilisation d'une couche de base selon les revendications 1 ou 2,
caractérisée par
une quantité appliquée de 15 à 35 g de copolymères par m².

4. Utilisation selon la revendication 3,
caractérisée par
des colles aqueuses de dispersion comme adhésifs.
